# EUROPEAN PATENT APPLICATION

(11) **EP 3 748 169 A1**
(43) Date of publication of application: **09.12.2020**
(21) Application number: 19382468.7
(22) Date of filing: 06.06.2019
(51) Int. Cl.: F16B 2/24, F16B 5/06, F16B 5/12, F16B 21/08

(54) **ERGONOMIC FASTENING CLIP**

(71) Applicant: Illinois Tool Works Inc., Glenview, IL 60025 (US)
(72) Inventor: Cobacho Jordán, Luis, Glenview, IL Illinois 60025 (US)
(74) Representative: HGF

(57) **Abstract**

A fastening clip is provided for mounting a component part, such as an airbag, to a support structure, comprising a body portion, extending between an upper end region and a lower end region along a longitudinal axis, comprising at least one elastically deflectable retaining member, projecting laterally from said lower end region of said body portion so as to fixingly engage when inserted into an orifice of the support structure, and a head portion, provided at said upper end region of said body portion, comprising a rectangularly shaped plate member, having a flat upper surface extending in a transverse plane relative to said longitudinal axis, and at least one resilient spring member extending transversely away from opposing first edges of said plate member and folded towards said lower end region of said body portion.

## Description

The present invention generally relates to the field of fasteners and in particular, to the field of fastening clips for attaching one or more components, such as airbag devices, to an external structure. More specifically, the present invention relates to an ergonomic fastening clip for attaching a side-impact airbag or curtain-type airbag to a vehicle structure.

### Introduction

Airbags are safety devices that are increasingly being used in the motor industry and which, in combination with other safety components, such as seatbelts, help to reduce fatal accidents in the case of collisions. The tests to which the vehicles have been subjected, as well as, mortality statistics, have clearly demonstrated that the use of airbags can considerably improve the safety of automobile occupants and, when combined with other forms of passive safety, such as seat belts, significantly (by about 30%) reduce mortality in the case of serious accidents.

Today, manufacturers produce frontal airbags, which are designed to protect the driver and/ or passenger in the event of a head-on collision and, considering their positions, lateral airbags that are installed behind the posts and/or in the sides of the vehicle seats, along with curtain airbags.

Airbags of the curtain type are usually located in the part close to the roof on the sides of the automobile, e.g. situated above the front and rear doors. Such airbags have very rigorous requirements with regards to the goals set for them and the technical challenges that have to be overcome. Typical challenges may be their location in the vehicle and the way they are fastened, required deployment time and the time that the airbag is required to remain inflated. Other challenges may come from the fact that there is only a short distance between the body and the occupant and that there is little vehicle material between the occupant and an impacting vehicle. For example, it is essential that airbags are deployed in a fraction of a second, giving rise to an enormous snatch force on their attachment components, which then suffer the consequences of that impact.

Further, when installing new or restore previously deployed airbags, it is well known in the industry that the installation or restoration is tedious work, comprising steps, such as, (i) dismantling all the attachments of the airbag, (ii) replacing the airbag and installing a new one, and then again (iii) fitting all its attachments. The work involved generally requires the installer to at least partly manually assemble and install the airbag to the vehicle. During the assembly, the installer may have to push numerous fastening clips into a vehicle panel or structure to attach or operably couple the airbag to the vehicle. Such work steps can be very repetitive and potentially cause injuries to the installer if the component parts are not adequately designed for manual installation.

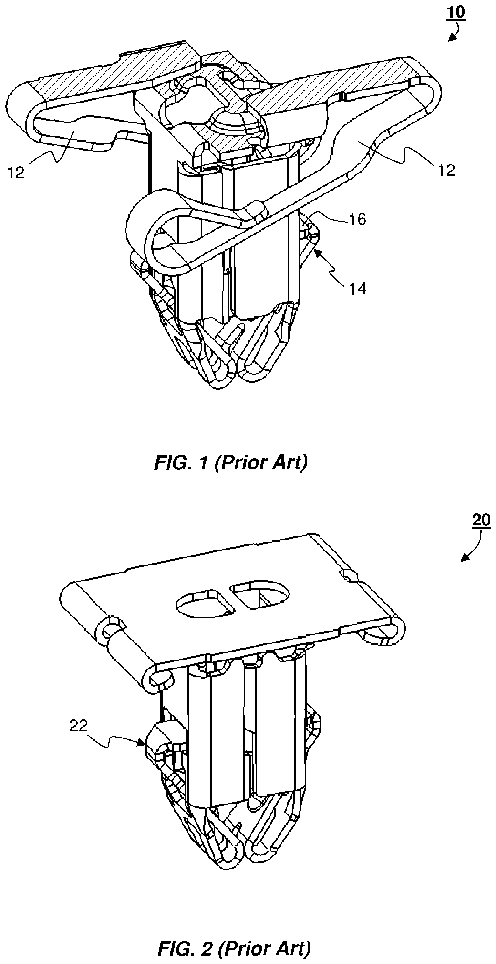

Figure 1, for example, illustrates a typical clip 10 used for the attachment of airbags, such as, side-impact or curtain airbags, that is of the type formed by a body from which extend flexible elements 12 typically bearing against the surface of the clip entered into the attachment panel of the vehicle. The clip 10 comprises laterally protruding tangs 14 having upper surfaces 16 configured to bear against an inner surface of the attachment panel so as to "sandwich" the panel surface between the flexible elements 12 and the upper surfaces 16 of the tangs 14. Clip 10 may be formed from a single folded and punched laminar surface, so as to form a three-dimensional body made from, for example, metal, such as, carbon steel.

However, clip 10 is designed in such a way that the top region (or head portion) does not provide sufficient area for the installer to safely and efficiently push the clip into the attachment panel. There are also exposed sharp edges on this top region which can lead to an uncomfortable insertion of the clip, or even potentially injure the installer during such insertion, i.e. when pushing the clip into an attachment panel opening.

Another fastener clip 20 typically used to attach airbags to a vehicle structure is illustrated in Figure 2. Fastening clip 20 comprises laterally protruding tangs 22 adapted to fixingly engage with the panel's inner surface when entered through a mounting aperture of the panel. Clip 20 is designed so as to either provide an unloaded connection, where the tangs 22 simply prevent the clip 20 from sliding out of the mounting aperture once installed, or where the connection is loaded only if the dimensions of the panel surface (thickness) and aperture (rectangular cut-out) are suitably matched to the clip design. In the event of an unloaded connection (i.e. without resilient springs), the bias or spring load may be provided by a different component of the airbag module. Usually, this different component is made in plastic which, for a spring effect under mechanical loads (strength, fatigue) may not perform as good as metal.

Also, even though clip 20 has a flat upper surface, sharp edges are exposed at the upper surface making it uncomfortable and even risk injuries to the installer when pushing the fastening clip 20 into the mounting aperture.

Therefore, it is an object of the present invention to provide an improved and ergonomic fastening clip, suitable for attaching airbags, such as side-impact or curtain airbags, that robust and efficient, as well as, ergonomic and safe so as to minimise any potential risk to the user during assembly.

### Summary of the Invention

According to a first aspect of the present invention, there is provided a fastening clip for mounting a component part, such as an airbag, to a support structure, comprising:
a body portion, extending between an upper end region and a lower end region along a longitudinal axis, comprising at least one elastically deflectable retaining member, projecting laterally from said lower end region of said body portion so as to fixingly engage when inserted into an orifice of the support structure;
a head portion, provided at said upper end region of said body portion, comprising a rectangularly shaped plate member, having a flat upper surface extending in a transverse plane relative to said longitudinal axis, and at least one resilient spring member extending transversely away from opposing first edges of said plate member and folded towards said lower end region of said body portion.

The fastening clip of the present invention provides the advantage of an ergonomic pushing surface without any exposed sharp edges that may damage other components in the application or the user during assembly. Further, the fastening clip of the present invention provides the advantage of combining spring arms with an ergonomic pushing surface adapted so as to prevent exposure of any sharp edges to the user or other components while the construction still allows the use of a single folded (and punched) laminar sheet material (e.g. metal).

Advantageously, said plate member may be configured for push engagement by a digit of a user.

Advantageously, said plate member may further comprise at least one first edge member extending from at least a portion of each one of said first edges and folded towards said lower end region and said body portion. Preferably, said at least one first edge member may extend from each one of said opposing first edges into forming said at least one resilient spring member. Even more preferably, a first one and a second one of said first edge member may be provided at opposite end regions of each one of said first edges so as to form a recess in between that is configured to enclose an exposed edge member projecting from each one of said first edges. Yet, even more preferably, any one of said first one and said second one of said first edge member may be adapted to limit movement of said at least one resilient spring member towards said upper end region during assembly.

Advantageously, said plate member may further comprise opposing second edges adjoining respective opposing said first edges. Preferably, said plate member may further comprise at least one second edge member extending from at least a portion of each one of said second edges and folded towards said lower end region and said body portion. Even more preferably, said at least one second edge member may extend from each one of said opposing second edges into forming said body portion. Yet, even more preferably, said second edge member may be provided at a central region of said of each one of said second edges.

Advantageously, said at least one resilient spring member may be folded towards said lower end region at a predetermined angle relative to said transverse plane.

Advantageously, said plate member further may comprise at least one aperture.

Advantageously, said at least one resilient spring member may be a flexion leg ending in a looped or folded end portion shaped so as to minimise damage to the support structure and/or the user during assembly.

Advantageously, said at least one resilient spring member may be provided at diagonally opposing corners of said plate member.

Advantageously, said body portion and said head portion may be formed from a single piece. Preferably, said body portion and said head portion are made from metal.

### Brief Description of the Drawings

Example embodiments of the description will now be described, by way of example only, with reference to the accompanying drawings, in which:
**Figure 1** **(Prior Art)** is a perspective illustrations of a typical fastening clip used for attaching components, such as airbags, to a vehicle chassis;
**Figure 2** **(Prior Art)** is a perspective illustration of another typical fastening clip used for attaching components, such as airbags, to a vehicle chassis;
**Figure 3** shows a perspective view of an example embodiment of the fastening clip of the present invention, (a) top-side view, (b) bottom-side view, and (c) perspective top view with hatched pushing surface;
**Figure 4** is a perspective view of the fastening clip shown in Figure 3, (a) top view, (b) front view and (c) side view;
**Figure 5** is a side cross-sectional side-view of the fastening clip when installed with an attachment panel;
**Figure 6** is a perspective cross-sectional view of the fastening clip shown in Figure 5, i.e. when installed in an attachment panel.

### Detailed description of the preferred embodiment(s)

The described example embodiment relates to a fastening clip suitable for securing paraphernalia and accessories. The embodiment(s) of the invention are normally applied in vehicles. Although the invention is described with respect to vehicles, the invention is not restricted to vehicles altogether, but may also be used in other structures requiring attachment of accessories or peripheral components to a structure.

Certain terminology is used in the following description for convenience only and is not limiting. The words *'right', 'left', 'lower', 'upper', 'front', 'rear', 'upward, 'down'* and *'downward'* designate directions in the drawings to which reference is made and are with respect to the described component when assembled and mounted. The words *'inner', 'inwardly'* and *'outer', 'outwardly'* refer to directions toward and away from, respectively, a designated centreline or a geometric centre of an element being described (e.g. central axis), the particular meaning being readily apparent from the context of the description.

Further, as used herein, the terms *'connected', 'attached', 'coupled', 'mounted'* are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, *"first", "second", "third"* etc. merely indicate that different instances of like objects are being referred to and are not intended to imply that the objects so described must be in a given sequence, either temporally, spatially, in ranking or in any other manner.

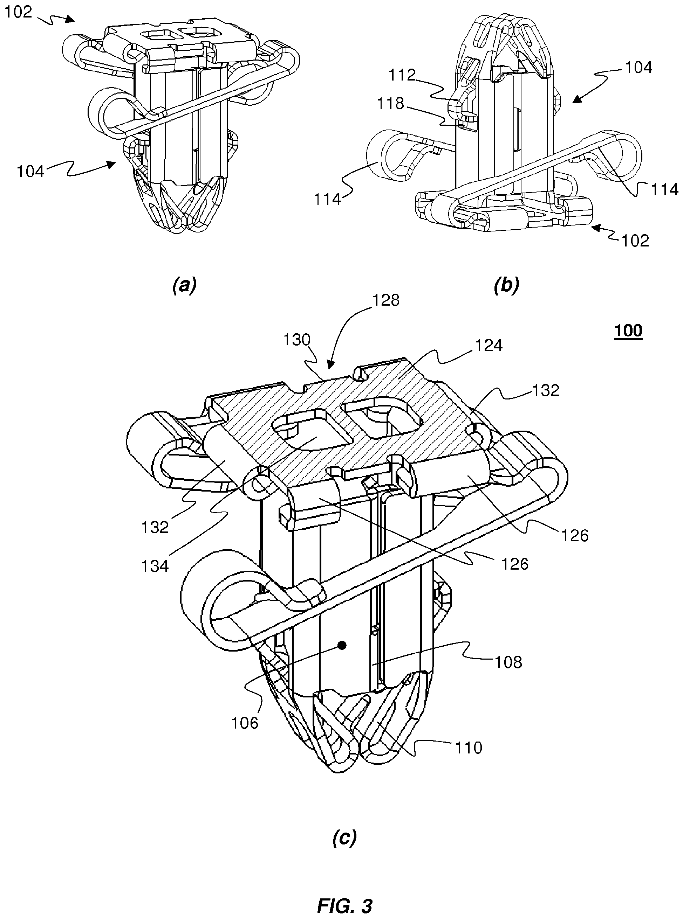

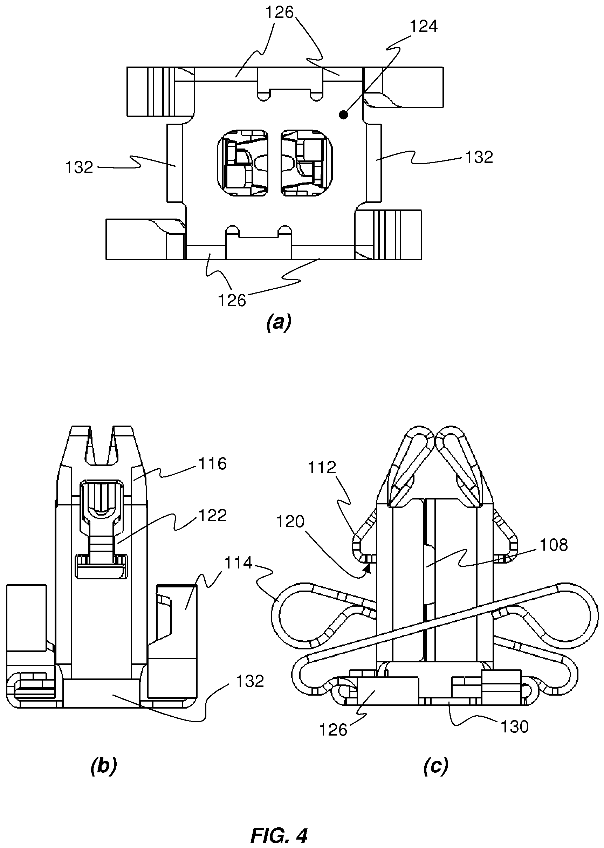

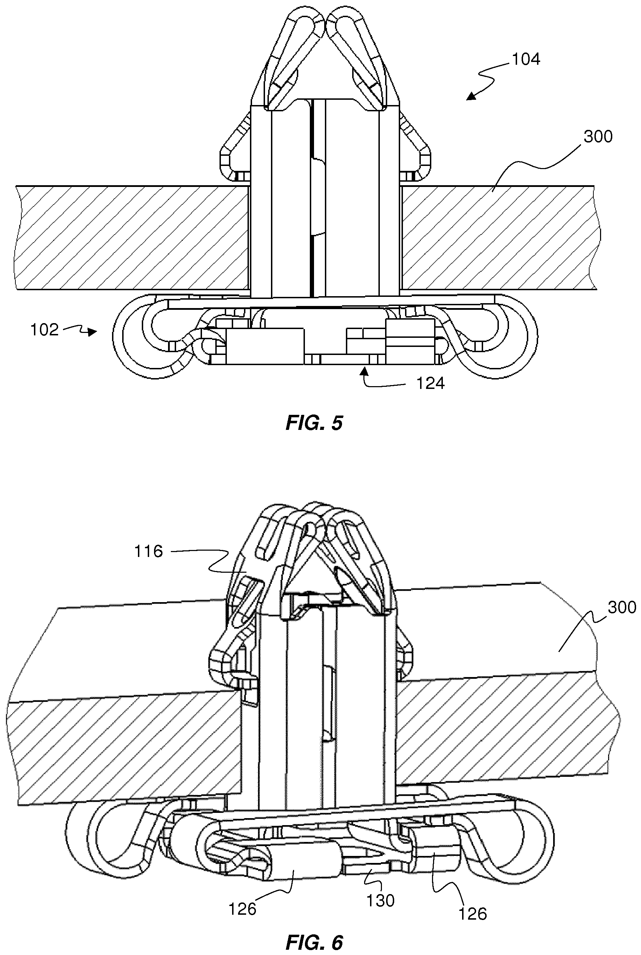

Referring now to Figures 3, 4, 5 and 6, an example embodiment of the fastening clip 100 is shown before it is used for assembly, i.e. when securing an airbag to an attachment panel. In particular, the clip 100 of the present invention comprises an improved airbag clip of the type of clips which are used for the attachment of airbags, for example side-impact or curtain airbags, of the type formed by a body 104 from which extend flexible elements such as spring elements 114 bearing against the surface of the clip 100 which enters the attachment panel 300, as well as, descending tangs 110 which give rise to different structures for the clip 100, such as, for example, side limbs 112 having surfaces bearing against the inner surface of the said attachment panel 300 in such a way that the supporting surfaces and those provided by the flexible spring elements 114 engage the attachment panel 300 on both sides, in the form of a sandwich, enabling the clip 100 to be supported on the attachment panel 300. The improvements comprise a more ergonomic pushing surface, as well as, protection from potential injuries during assembly.

Clips 100 for airbags such as those according to this invention are inserted into an opening made in the surface of the attachment panel 300. This surface effectively divides the clip 100 into an upper outer part, i.e. a head portion 102, which is not inserted into the opening and an inner lower part, i.e. body portion 104, which is inserted into the opening. The upper part or head portion 102 of the clip 100 corresponds to the outer part and the lower part or body portion 104 of the clip 100 corresponds to the inner part. Likewise, the ascending direction is from the inner part to the outer (lower to upper) and the descending part is from the outer part to the inner (upper to lower). The body portion 104 may be formed by a box 106 that is formed by the union of two surfaces which are approximately "U"-shaped in transverse cross-section, being attached by one of their ends, and the attachment being strengthened by tabs 108 produced by division of the portions of the connecting part forming opposite surfaces. As may be seen from the attached figures, tabs 108 which are located within box 106 may have nails (not shown) that are shaped so as to engage in the openings provide in box 106.

Tangs 110 have an inclination towards the central axis of the clip and extend downwards from box 106 away from the centre of clip 100 to form a loop and in the opposite direction extend as ascending side limbs 112. In the preferred construction of the invention and as illustrated in the drawings, the loops of tangs 110 are in contact with each other. This contact provides strength to the clip against pull-out forces.

Tangs 110 may have an enlarged surface 116, almost in the form of a triangle, which allows its base to extend beyond the walls forming box 106. This obviously prevents box 106 from "descending" under pressure and passing beyond those stops represented by the enlarged surface 116.

Side limbs 112 are configured to emerge from the inner part of box 106 towards the exterior of the same, through a hollow space, opening or window 118 made in its surface, creating a bearing surface 120 that is approximately parallel to the attachment panel 300 (when installed) and is configured to engage the same, in the known manner as previously described for these type of clips 100.

The sides of window 118 may have tabs 122 which provide a support for the bearing surfaces 120 of box 106 against the inner surface of the panel 300 in response to forces which tend to extract clip 100.

The upper part or head portion 102 of the clip 100 comprises a substantially rectangularly shaped plate 124 with a flat upper surface. The plate 124 is arranged transverse to a longitudinal axis of the body portion 104. A resilient spring element 114 (i.e. flexion leg) extends transversely away from opposing edges at diagonally opposing corners of the plate 124. Each spring element 114 is folded towards the body portion 104 so as to form an obtuse angle with the flat upper surface of the plate 124. Further, an end portion of each spring element 114 is looped back so as to form a round spring element end.

A portion 126 of a protruding front edge of the plate 124 is folded towards the body portion 104 so as to form a rounded front edge. In particular, two folded front edge portions 126 are provided on opposite ends of opposing front edges of the plate 124, so as to form an enclosing recess 128 for a protruding sharp edge section 130. Further, in this particular example, each spring element 114 extends from the lower end of one of the folded front edge portions 126 so as to form parallelly arranged but opposing spring elements 114.

The folded front edge portions 126 are further configured to limit the bending movement of the spring elements 114 during assembly, i.e. the lower end of the folded front edge portions may function as a stopper element during assembly and a support element once assembled by engaging with an end portion of the spring element 114.

A portion 132 of a protruding side edge of the plate 124 is folded towards and merging into the body portion 104 (i.e. forming the box 106), so as to form a rounded side edge. In particular, two folded side edge portions 132 are provided at a central region of opposing side edges of the plate 124.

Two apertures 134 are provided in a central region of the plate 124, so as to allow access to the inner part of box 106.

Clip 100 may be formed with a single folded and punched laminar surface forming its three-dimensional body. The laminar surface may be made from metal, such as, for example, carbon steel which has been heat treated to impart improved strength qualities to it. Further, clip 100 may undergo treatment to prevent corrosion and/or receive a suitable coating in order to improve its service life and wear in relation to dust, moisture and other elements which might attack the clip.

During assembly, the user simply pushed the fastening clip 100 into the mounting aperture if the attachment panel 300 fixingly engaging the side limbs 112 with an inner surface of the attachment panel 300. The flat surface and round edges of the plate 124 provide an ergonomic pushing surface adapted to minimise potential injuries to the user during assembly. Further, enclosing folded front edge portions 126 provide protection from any sharp protruding edges 130 of the plate 124. Thus, the fastening clip 100 of the present invention is completely void of any potentially harmful sharp edges minimising damage to components once installed or potential injuries to the user during installation. It will be appreciated by persons skilled in the art that the above embodiment(s) have been described by way of example only and not in any limitative sense, and that various alterations and modifications are possible without departing from the scope of the invention as defined by the appended claims.

## Claims

1. A fastening clip for mounting a component part, such as an airbag, to a support structure, comprising:
a body portion, extending between an upper end region and a lower end region along a longitudinal axis, comprising at least one elastically deflectable retaining member, projecting laterally from said lower end region of said body portion so as to fixingly engage when inserted into an orifice of the support structure;
a head portion, provided at said upper end region of said body portion, comprising a rectangularly shaped plate member, having a flat upper surface extending in a transverse plane relative to said longitudinal axis, and at least one resilient spring member extending transversely away from opposing first edges of said plate member and folded towards said lower end region of said body portion.

2. A fastening clip according to claim 1, wherein said plate member is configured for push engagement by a digit of a user.

3. A fastening clip according to any one of the preceding claims, wherein said plate member further comprises at least one first edge member extending from at least a portion of each one of said first edges and folded towards said lower end region and said body portion.

4. A fastening clip according to claim 3, wherein said at least one first edge member extends from each one of said opposing first edges into forming said at least one resilient spring member.

5. A fastening clip according to any one of claims 3 and 4, wherein a first one and a second one of said first edge member is provided at opposite end regions of each one of said first edges so as to form a recess in between that is configured to enclose an exposed edge member projecting from each one of said first edges.

6. A fastening clip according to any one of claim 5, wherein any one of said first one and said second one of said first edge member is adapted to limit movement of said at least one resilient spring member towards said upper end region during assembly.

7. A fastening clip according to any one of the preceding claims, wherein said plate member further comprises opposing second edges adjoining respective said opposing first edges.

8. A fastening clip according to claim 7, wherein said plate member further comprises at least one second edge member extending from at least a portion of each one of said second edges and folded towards said lower end region and said body portion.

9. A fastening clip according to claim 8, wherein said at least one second edge member extends from each one of said opposing second edges into forming said body portion.

10. A fastening clip according to claim 9, wherein said second edge member is provided at a central region of said of each one of said second edges.

11. A fastening clip according to any one of the preceding claims, wherein said at least one resilient spring member is folded towards said lower end region at a predetermined angle relative to said transverse plane.

12. A fastening clip according to any one of the preceding claims, wherein said plate member further comprises at least one aperture.

13. A fastening clip according to any one of the preceding claims, wherein said at least one resilient spring member is a flexion leg ending in a looped or folded end portion shaped so as to minimise damage to the support structure and/or the user during assembly.

14. A fastening clip according to any one of the preceding claims, wherein said at least one resilient spring member is provided at diagonally opposing corners of said plate member.

15. A fastening clip according to any one of the preceding claims, wherein said body portion and said head portion are formed from a single piece.

16. A fastening clip according to any one of the preceding claims, wherein said body portion and said head portion are made from metal.
